# EUROPEAN PATENT APPLICATION

(11) **EP 4 083 087 A1**
(43) Date of publication of application: **02.11.2022**
(21) Application number: 20904314.0
(22) Date of filing: 23.12.2020
(51) Int. Cl.: C08F 220/06, C08F 220/28, C04B 24/26, C04B 28/02

(54) **METHOD FOR PRODUCING POWDER DISPERSANT COMPOSITION FOR HYDRAULIC COMPOSITION**

(30) Priority: 25.12.2019 JP 2019234431; 25.12.2019 JP 2019234433; 03.12.2020 JP 2020200705
(71) Applicant: Kao Corporation, Chuo-ku Tokyo 103-8210 (JP)
(72) Inventor: SHIMADA Kohei, Wakayama-shi, Wakayama 640-8580 (JP); SAGAWA Keiichirou, Wakayama-shi, Wakayama 640-8580 (JP)
(74) Representative: Hoffmann Eitle
(86) International application number: PCT/JP2020/048133
(87) International publication number: WO 2021/132317

(57) **Abstract**

The present invention is a method for producing a powder dispersant composition for hydraulic compositions including, drying a mixture containing a copolymer having constituent unit (1) represented by the following formula (1) and constituent unit (2) represented by the following formula (2) and water to produce a powder containing the copolymer, wherein:
when the copolymer is a copolymer whose n in constituent unit (2) is less than 40, the mixture is dried by a thin film drying method or a spray drying method with a pH of 11 or more and 14 or less;
when the copolymer is a copolymer whose n in constituent unit (2) is 40 or more and less than 80, the mixture is dried by a thin film drying method or a spray drying method with a pH of 9 or more and 14 or less; and
when the copolymer is a copolymer whose n in constituent unit (2) is 80 or more, the mixture is dried by a thin film drying method or a spray drying method with a pH of 7 or more and 14 or less, 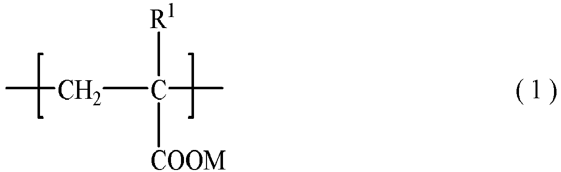 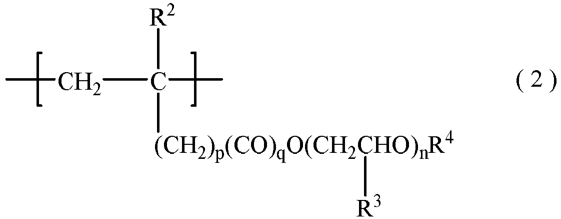 wherein R¹ and R³ are the same or different and individually represent a hydrogen atom or a methyl group; R² and R⁴ are the same or different and individually represent a hydrogen atom or an alkyl group with 1 or more and 3 or less carbons; M represents a hydrogen atom, an alkali metal, an alkaline-earth metal, ammonium or an organic ammonium; p represents a number of 0 or more and 2 or less; q represents a number of 0 or 1; and n represents an average number of added moles and a number of 5 or more and 150 or less.

## Description

### Field of the Invention

The present invention relates to a method for producing a powder dispersant composition for hydraulic compositions.

### Background of the Invention

In recent years, Japan has witnessed the deterioration of its major infrastructure constructed during the period of rapid economic growth becoming obvious, and thus is about to enter the age of great updates and repairs of infrastructure. Especially, the field of repair and reinforcement is expected to grow in demand, and in this field, repairing materials having a hydraulic composition and a powdered dispersant (hereinafter, referred to as a powder dispersant) premixed therein are mainly used.

While examples of powder dispersants premixed in repairing materials include naphthalenesulfonic acid-based dispersants, polycarboxylic acid-based dispersants, melamine sulfonic acid-based dispersants and others, polycarboxylic acid-based dispersants are valued as they are highly dispersible and can be blended or added in reduced amounts, and have good compatibility with polymeric thickeners typified by methylcellulose.

Examples of powderization methods for powder dispersants include thin film drying methods typified by a drum drying method, a disk drying method and a belt drying method, a spray drying method, a kneader method, an inorganic powder carrying method and others. Of particular importance in powdering processes are the melting point and glass transition temperature of dispersants, and a comparison of polycarboxylic acid-based dispersants having the same polymerization ratio of an adsorption group and an ethyleneoxy group (hereinafter also expressed as EO) graft chain shows that polycarboxylic acid-based powder dispersants having a larger average number of added moles of EO of an EO graft chain which is a steric repulsion group have a higher freezing point, and thus are superior in thin film formability or ease of grinding while cooling and are relatively easier to powderize.

JP-A 2000-169206 discloses a method for producing a powdery cement dispersant including, adding a reducing agent to a mixture composed mainly of an acrylate-based or methacrylate-based polymeric compound having a predetermined constituent unit and including water or a solvent, and then drying the mixture. JP-A 2001-213671 discloses a powder dispersant for monolithic refractories comprising, a polymeric compound having a polyalkylene glycol chain and a reducing compound.

### Summary of the Invention

However, in the general powderization process for polycarboxylic acid-based dispersants, as the average number of added moles of EO of an EO graft chain decreases, it was sometimes difficult to obtain powder dispersants in commercially acceptable yields (for example, with a dry mass of 90% or more relative to the mass of solids in a dispersant before drying) by a drying method of evaporating moisture to obtain a powder.

The present invention provides a method for producing a powder dispersant composition for hydraulic compositions capable of producing a powder-form polycarboxylic acid-based dispersant in a high yield.

The present invention relates to a method for producing a powder dispersant composition for hydraulic compositions including, drying a mixture containing a copolymer having constituent unit (1) represented by the following formula (1) and constituent unit (2) represented by the following formula (2) and water to produce a powder containing the copolymer, wherein:
when the copolymer is a copolymer whose n in constituent unit (2) is less than 40, the mixture is dried by a thin film drying method or a spray drying method with a pH of 11 or more and 14 or less;
when the copolymer is a copolymer whose n in constituent unit (2) is 40 or more and less than 80, the mixture is dried by a thin film drying method or a spray drying method with a pH of 9 or more and 14 or less; and
when the copolymer is a copolymer whose n in constituent unit (2) is 80 or more, the mixture is dried by a thin film drying method or a spray drying method with a pH of 7 or more and 14 or less, 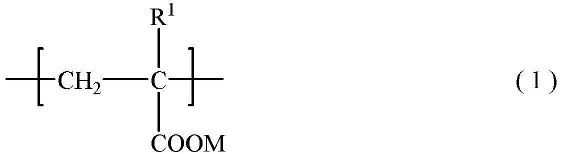 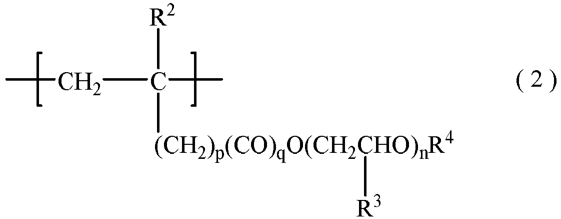
wherein R¹ and R³ are the same or different and individually represent a hydrogen atom or a methyl group; R² and R⁴ are the same or different and individually represent a hydrogen atom or an alkyl group with 1 or more and 3 or less carbons; M represents a hydrogen atom, an alkali metal, an alkaline-earth metal, ammonium or an organic ammonium; p represents a number of 0 or more and 2 or less; q represents a number of 0 or 1; and n represents an average number of added moles and a number of 5 or more and 150 or less.

In addition, the present invention relates to a method for producing a powder dispersant composition for hydraulic compositions including, drying a mixture containing a copolymer having constituent unit (1) represented by the above formula (1) and constituent unit (2) represented by the above formula (2) and water to produce a powder containing the copolymer, wherein:
when the copolymer is a copolymer whose n in constituent unit (2) is less than 40, the mixture is dried with a pH of 11 or more and 14 or less;
when the copolymer is a copolymer whose n in constituent unit (2) is 40 or more and less than 80, the mixture is dried with a pH of 9 or more and 14 or less;
when the copolymer is a copolymer whose n in constituent unit (2) is 80 or more and less than 100, the mixture is dried with a pH of 8 or more and 14 or less; and
when the copolymer is a copolymer whose n in constituent unit (2) is 100 or more, the mixture is dried with a pH of 7 or more and 14 or less.

Hereinafter, when the method for producing a powder dispersant composition for hydraulic compositions of the present invention is referred to, it includes these two production methods. Matters described below are appropriately applicable to each of the production methods.

According to the present invention, provided is a method for producing a powder dispersant composition for hydraulic compositions capable of producing a powder-form polycarboxylic acid-based dispersant in a high yield.

### Embodiments of the Invention

According to the present invention, provided is a method for producing a powder dispersant composition for hydraulic compositions to solve problems when powder-form polycarboxylic acid-based dispersants are produced by drying methods. In other words, provided is a method for producing a powder dispersant composition for hydraulic compositions capable of increasing the yield of a powder polycarboxylic acid-based dispersant by adjusting the pH of a mixture such as an aqueous solution including the dispersant to a predetermined value according to a number of added moles of EO of a copolymer.

The mechanism by which the method for producing a powder dispersant composition for hydraulic compositions of the present invention enables the powderization of the copolymer and increases the yield is not exactly clear, but it is inferred as follows. As a polycarboxylic acid-based dispersant contains a monomer having a carboxy group as a polymerization unit, it is considered that the degree of dissociation of the carboxy group is increased as the pH is enhanced. This means that the polymerization unit is more strongly negatively charged, and it is expected that the electrostatic repulsion force expands the spread of the polymer chain. It is considered that this results in an increased polymer molecular volume and thus an increased drying area, thereby improving the ease of drying. It is inferred that, in the present invention, the ease of drying is further improved by setting an appropriate pH according to an average number of added moles of EO of an EO graft chain.

### <Copolymer 1>

Copolymer 1 is a copolymer having constituent unit (1) represented by the formula (1) and constituent unit (2) represented by the formula (2).

In constituent unit (1) represented by the formula (1), R¹ is a hydrogen atom or a methyl group and preferably includes a methyl group from the viewpoints of reactivity and ease of powderization. M is a hydrogen atom, an alkali metal, an alkaline-earth metal, ammonium or an organic ammonium, and is preferably an alkali metal or an alkaline-earth metal from the viewpoint of ease of powderization. Constituent unit (1) may be composed of two or more kinds. Examples of a monomer serving as constituent unit (1) include monomers selected from acrylic acid, methacrylic acid and salts thereof.

In constituent unit (2) represented by the formula (2), R² and R⁴ are the same or different, and individually represent a hydrogen atom or an alkyl group with 1 or more and 3 or less carbons and preferably individually represent an alkyl group with one carbon, i.e., a methyl group from the viewpoints of reactivity and ease of powderization. In addition, R³ is a hydrogen atom or a methyl group and preferably a hydrogen atom from the viewpoint of ease of powderization. Constituent unit (2) may be composed of two or more kinds. p represents a number of 0 or more and 2 or less, and is preferably 0 or more and 1 or less and more preferably 0 from the viewpoint of ease of powderization. q represents a number of 0 or 1 and preferably 1 from the viewpoint of ease of powderization. n represents an average number of added moles, and represents a number of 5 or more and 150 or less from the viewpoint of ease of powderization. n is preferably 20 or more, more preferably 40 or more and further preferably 60 or more. Further, n is preferably 140 or less, more preferably 130 or less and further preferably 120 or less. Examples of a monomer serving as constituent unit (2) include monomers selected from methoxypolyethylene glycol monomethacrylate, polyoxyethylene methallyl ether, polyoxyethylene isoprenyl ether and polyoxyethylene vinyl ether.

A molar ratio of constituent unit (1) and constituent unit (2) in copolymer 1, constituent unit (1)/constituent unit (2), is preferably 1 or more, more preferably 2 or more, further preferably 3 or more, furthermore preferably 5 or more and furthermore preferably 8 or more, and preferably 10 or less, more preferably 9 or less, further preferably 7 or less, furthermore preferably 5 or less, furthermore preferably 4 or less and furthermore preferably 3 or less from the viewpoint of ease of powderization.

Copolymer 1 has a weight average molecular weight of preferably 20,000 or more, more preferably 25,000 or more, further preferably 30,000 or more and furthermore preferably 40,000 or more, and preferably 70,000 or less, more preferably 60,000 or less, further preferably 50,000 or less and furthermore preferably 45,000 or less from the viewpoint of ease of powderization. This weight average molecular weight is measured by gel permeation chromatography (GPC) under the following conditions.

### *GPC conditions

Device: GPC (HLC-8320GPC) manufactured by Tosoh Corporation
Columns: G4000PWXL + G2500PWXL (manufactured by Tosoh Corporation)
Eluent: 0.2 M phosphate buffer/CH₃CN=9/1
Flow rate: 1.0 mL/min
Column temperature: 40°C
Detection: RI
Sample size: 0.2 mg/mL
Standard substance: expressed in terms of polyethylene glycol (monodisperse polyethylene glycol: molecular weight 87,500, 250,000, 145,000, 46,000, 24,000)

Copolymer 1 may have a constituent unit other than constituent units (1) and (2) [hereinafter, referred to as constituent unit (3)]. Examples of an arbitrary monomer serving as constituent unit (3) include ethylene glycol methacrylate phosphate, methyl acrylate and 2-hydroxyethyl acrylate.

A proportion of the total of constituent unit (1) and constituent unit (2) in all constituent units of copolymer 1 is preferably 80 mol% or more, more preferably 90 mol% or more and further preferably 95 mol% or more, and preferably 100 mol% or less, and may be 100 mol% from the viewpoint of ease of powderization.

A proportion of the total of constituent unit (1) and constituent unit (2) in all constituent units of copolymer 1 is preferably 80 mass% or more and more preferably 90 mass% or more, and preferably 100 mass% or less, and may be 100 mass% from the viewpoint of ease of powderization.

In all constituent units of copolymer 1, methallyl sulfonic acid or a salt thereof is included in a proportion of preferably 1 mol% or less, more preferably 0.5 mol% or less, further preferably 0.1 mol% or less, furthermore preferably 0.05 mol% or less and furthermore preferably 0.01 mol% or less, and is furthermore preferably substantially not included, in other words, included in a proportion of furthermore preferably substantially 0 mol% and furthermore preferably 0 mol% from the viewpoint of ease of powderization.

Further, in all constituent units of copolymer 1, polyamide polyamine is included in a proportion of preferably 1 mol% or less, more preferably 0.5 mol% or less, further preferably 0.1 mol% or less, furthermore preferably 0.05 mol% or less and furthermore preferably 0.01 mol% or less, and is furthermore preferably substantially not included, in other words, included in a proportion of furthermore preferably substantially 0 mol% and furthermore preferably 0 mol% from the viewpoint of ease of powderization.

In the present invention, a mixture containing copolymer 1 and water (hereinafter also referred to as a mixture for drying) is dried under predetermined conditions to produce a powder containing copolymer 1. The mixture for drying is preferably an aqueous solution.

In the present invention,
when copolymer 1 is a copolymer whose n in constituent unit (2) is less than 40, the mixture for drying is dried by a thin film drying method or a spray drying method with a pH of 11 or more and 14 or less,
when copolymer 1 is a copolymer whose n in constituent unit (2) is 40 or more and less than 80, the mixture for drying is dried by a thin film drying method or a spray drying method with a pH of 9 or more and 14 or less, and
when copolymer 1 is a copolymer whose n in constituent unit (2) is 80 or more, the mixture for drying is dried by a thin film drying method or a spray drying method with a pH of 7 or more and 14 or less.

According to another aspect of the present invention, when copolymer 1 is a copolymer whose n in constituent unit (2) is less than 40, the mixture for drying is dried with a pH of 11 or more and 14 or less,
when copolymer 1 is a copolymer whose n in constituent unit (2) is 40 or more and less than 80, the mixture for drying is dried with a pH of 9 or more and 14 or less,
when copolymer 1 is a copolymer whose n in constituent unit (2) is 80 or more and less than 100, the mixture for drying is dried with a pH of 8 or more and 14 or less, and
when copolymer 1 is a copolymer whose n in constituent unit (2) is 100 or more, the mixture for drying is dried with a pH of 7 or more and 14 or less.

In the present invention, the mixture for drying is subjected to drying with a pH falling within any of the above predetermined ranges according to an average number of added moles n of an alkylene oxide of copolymer 1. This pH may be a pH at which drying of the mixture for drying is started. In other words, drying can be started using the mixture for drying with a pH falling within any of the above predetermined ranges in the present invention.

In the method for producing a powder dispersant composition for hydraulic compositions of the present invention, when copolymer 1 is a copolymer whose n in constituent unit (2) is less than 40, the mixture for drying has a pH of preferably 12 or more and 13 or less from the viewpoint of ease of powderization.

In the method for producing a powder dispersant composition for hydraulic compositions of the present invention, when copolymer 1 is a copolymer whose n in constituent unit (2) is 40 or more and less than 80, the mixture for drying has a pH of preferably 10 or more and 13 or less from the viewpoint of ease of powderization.

In the method for producing a powder dispersant composition for hydraulic compositions of the present invention, when copolymer 1 is a copolymer whose n in constituent unit (2) is 80 or more, the mixture for drying has a pH of preferably 8 or more and 13 or less from the viewpoint of ease of powderization.

In the method for producing a powder dispersant composition for hydraulic compositions of the present invention, when copolymer 1 is a copolymer whose n in constituent unit (2) is 80 or more and less than 100, the mixture for drying has a pH of preferably more than 9 and 14 or less and more preferably more than 9 and 13 or less from the viewpoint of ease of powderization.

In the method for producing a powder dispersant composition for hydraulic compositions of the present invention, when copolymer 1 is a copolymer whose n in constituent unit (2) is 100 or more, the mixture for drying has a pH of 8 or more and 14 or less, preferably more than 9 and 14 or less and more preferably more than 9 and 13 or less from the viewpoint of ease of powderization.

In the present invention, a pH of the mixture for drying, for example, the aqueous solution of copolymer 1 is preferably adjusted with a hydroxide of an alkali metal or an alkaline-earth metal from the viewpoints of one-component stability and safety and the viewpoint of ease of powderization. The hydroxide is preferably one or more selected from barium hydroxide, calcium hydroxide, potassium hydroxide and sodium hydroxide, and more preferably one or more selected from potassium hydroxide and sodium hydroxide.

In addition, the mixture for drying which is subjected to drying has a viscosity of preferably 250 mPa·s or more, more preferably 300 mPa·s or more and further preferably 350 mPa·s or more, and preferably 5,000 mPa·s or less, more preferably 3,000 mPa·s or less and further preferably 1,000 mPa·s or less from the viewpoints of productivity of the powder of copolymer 1 and ease of liquid sending and the viewpoint of ease of powderization.

The content of copolymer 1 in the mixture for drying is preferably 10 mass% or more and more preferably 20 mass% or more, and preferably 50 mass% or less and more preferably 40 mass% or less in terms of solids content from the viewpoint of the powderization of copolymer 1.

When the mixture for drying is the aqueous solution of copolymer 1, the content of copolymer 1 in the aqueous solution is preferably 10 mass% or more and more preferably 20 mass% or more, and preferably 50 mass% or less and more preferably 40 mass% or less in terms of solids content from the viewpoint of the powderization of copolymer 1.

The mixture for drying can further contain anticaking agents, for example, an inorganic powder and/or an organic powder, in which case the mixture for drying may be in suspension form, and such a form may also be referred to as an aqueous solution for convenience in the present invention.

The mixture for drying can be dried by heat drying or vacuum drying, and is preferably dried by heat drying from the viewpoint of the productivity of the dried product.

The mixture for drying can be dried by a thin film drying method, a spray drying method or the like. In the present invention, the mixture for drying or further the aqueous solution of copolymer 1 is preferably dried by a thin film drying method or a spray drying method from the viewpoint of productivity.

Examples of the thin film drying method include a drum drying method and a disk drying method.

The drum drying method specifically includes, for example, the following processes. The mixture for drying such as the aqueous solution of copolymer 1 or the like is uniformly applied onto a drying drum with the drying drum rotated, and moisture is evaporated, thereby obtaining a thin film sheet-form product. Subsequently, the formed sheet is peeled off by a scraper, and the sheet is wound up by a drum which is cooled to room temperature or lower and cooled on the drum for a certain period of time, thereby changing the obtained sheet-form product into a glassy one which is easier to grind. The obtained glassy sheet is peeled off from the cooling drum by a scraper and introduced into and ground by a grinder such as a feather mill or the like to obtain a power product.

Further, the disk drying method specifically includes the following processes. The mixture for drying such as the aqueous solution of copolymer 1 or the like is uniformly applied onto a disk with the disk rotated, and moisture is evaporated, thereby obtaining a thin film sheet-form product. Subsequently, the formed sheet is peeled off by a scraper, and the dried product peeled off is cooled and thus changed into a glassy one which is easier to grind. The obtained glassy dried product is introduced into and ground by a grinder such as a feather mill or the like to obtain a powder product.

In addition, the mixture for drying can be dried by a spray drying method. Specifically, the spray drying method includes the following processes. The mixture for drying such as the aqueous solution of copolymer 1 or the like is sprayed into a drying chamber from a sprayer such as a rotary disk nozzle, a two-fluid nozzle or an ultrasonic nozzle, and moisture is evaporated and separated from active components of the dispersant. Until the sprayed mixture for drying such as the aqueous solution of copolymer 1 or the like reaches the lower part of the drying chamber, moisture is evaporated to change copolymer 1 into a powdered solid, which is sent to a collection part by air blow and thereafter collected by a powder separator such as a cyclone or the like.

A temperature at which the mixture for drying is dried is preferably 100°C or more and more preferably 120°C or more, and preferably 200°C or less and more preferably 180°C or less under ordinary pressure from the viewpoints of the ease of drying of the mixture for drying and the thermal stability of the powder of copolymer 1 and the viewpoint of ease of powderization. On the other hand, the drying temperature under reduced pressure is not limited, and for example, may have a lower limit temperature lower than the above. This temperature may be a temperature of a heating medium applied to the mixture for drying.

The powder containing copolymer 1 is obtained by drying the mixture for drying, preferably the aqueous solution of copolymer 1. The content of copolymer 1 in the obtained dry powder is preferably 80 mass% or more and more preferably 90 mass% or more, and preferably 99 mass% or less and more preferably 98 mass% or less in terms of active solids content.

Regarding the powder containing copolymer 1, "powder" may mean any of solid particles including those in the form of particles, flakes, pellets, granules or the like. The shape of the powder may either be uniform or non-uniform.

In the present invention, it is preferred from the viewpoint of ease of powderization that the monomer serving as constituent unit (1) be methacrylic acid, the monomer serving as constituent unit (2) be methoxypolyethylene glycol monomethacrylate, n be 5 or more and less than 40, the molar ratio of constituent unit (1)/constituent unit (2) be 2 or more and 4 or less, copolymer 1 have a weight average molecular weight of 40000 or more and 60000 or less, the proportion of the total of constituent units (1) and (2) in all constituent units of copolymer 1 be 100 mol%, and the mixture for drying be dried by a spray drying method.

In the present invention, it is preferred from the viewpoint of ease of powderization that the monomer serving as constituent unit (1) be a monomer selected from methacrylic acid and acrylic acid, the monomer serving as constituent unit (2) be methoxypolyethylene glycol monomethacrylate, n be 40 or more and less than 80, the molar ratio of constituent unit (1)/constituent unit (2) be 1 or more and 3 or less, copolymer 1 have a weight average molecular weight of 30000 or more and 50000 or less, the proportion of the total of constituent units (1) and (2) in all constituent units of copolymer 1 be 100 mol%, and the mixture for drying be dried by a spray drying method.

In the present invention, it is preferred from the viewpoint of ease of powderization that the monomer serving as constituent unit (1) be acrylic acid, the monomer serving as constituent unit (2) be polyoxyethylene methallyl ether, n be 40 or more and less than 80, the molar ratio of constituent unit (1)/constituent unit (2) be 3 or more and 5 or less, copolymer 1 have a weight average molecular weight of 25000 or more and 45000 or less, the proportion of the total of constituent units (1) and (2) in all constituent units of copolymer 1 be 100 mol%, and the mixture for drying be dried by a spray drying method.

In the present invention, it is preferred from the viewpoint of ease of powderization that the monomer serving as constituent unit (1) be a monomer selected from methacrylic acid and acrylic acid, the monomer serving as constituent unit (2) be methoxypolyethylene glycol monomethacrylate, n be 100 or more and 150 or less, the molar ratio of constituent unit (1)/constituent unit (2) be 8 or more and 10 or less, copolymer 1 have a weight average molecular weight of 25000 or more and 45000 or less, the proportion of the total of constituent units (1) and (2) in all constituent units of copolymer 1 be 100 mol%, and the mixture for drying be dried by a spray drying method.

The powder containing copolymer 1 produced by the present invention has an average particle size of preferably 1 µm or more, more preferably 10 µm or more and further preferably 20 µm or more, and preferably 90 µm or less, more preferably 80 µm or less and further preferably 70 µm or less from the viewpoint of ease of powderization.

The powder containing copolymer 1 produced by the present invention may have a median diameter (D50) of 1 µm or more, further 25 µm or more and further 50 µm or more, and 90 µm or less, further 80 µm or less and further 70 µm or less. The median diameter (D50) is measured under non-ultrasonic irradiation by the laser diffraction/scattering particle size distribution analyzer LA-300 (manufactured by Horiba, Ltd.) with ethanol (ethanol (95), manufactured by FUJIFILM Wako Pure Chemical Corporation) as a dispersion medium.

In addition, the powder containing copolymer 1 produced by the present invention may have a proportion of particles with a particle size of 1 µm or more and 250 µm or less of 90 mass% or more and further 95 mass% or more, and 100 mass% or less. This proportion is calculated on the basis of results of particle sizes measured under non-ultrasonic irradiation by the laser diffraction/scattering particle size distribution analyzer LA-300 (manufactured by Horiba, Ltd.) with ethanol (ethanol (95), manufactured by FUJIFILM Wako Pure Chemical Corporation) as a dispersion medium.

In addition, the powder containing copolymer 1 produced by the present invention may have a median diameter (D50) of 1 µm or more, further 25 µm or more and further 50 µm or more, and 90 µm or less, further 80 µm or less and further 70 µm or less, and a proportion of particles with a particle size of 1 µm or more and 250 µm or less of 90 mass% or more and further 95 mass% or more, and 100 mass% or less. These median diameter and proportion are also measured and calculated by the same methods as described above.

The powder dispersant composition for hydraulic compositions produced by the present invention contains copolymer 1 in an amount of preferably 80 mass% or more and more preferably 90 mass% or more, and preferably 100 mass% or less and more preferably 95 mass% or less in terms of active components content from the viewpoint of ease of powderization. The powder dispersant composition for hydraulic compositions produced by the present invention may be composed of copolymer 1.

The powder dispersant composition for hydraulic compositions produced by the present invention can contain components other than copolymer 1. The composition can contain, for example, a powdering aid. Examples of the powdering aid include an inorganic powder. Examples of the inorganic powder include silicon oxide, salts of silicon oxide, carbonates or the like. In addition, organic powders such as polyethylene glycol or the like may also be used. When the composition contains a powdering aid, the content thereof is preferably 1 mass% or more and more preferably 5 mass% or more, and preferably 40 mass% or less and more preferably 20 mass% or less relative to copolymer 1 in terms of active components content from the viewpoint of ease of powderization. The powder dispersant composition for hydraulic compositions produced by the present invention may be composed of copolymer 1 and a powdering aid.

Examples of other components that may be contained in the powder dispersant composition for hydraulic compositions produced by the present invention include, for example, a powder defoamer, a powder shrinkage reducer, a powder thickener or the like. Examples of the powder defoamer and the powder shrinkage reducer include polyoxyalkylene glycol alkyl ethers. Examples of the powder thickener include cellulose derivatives such as hydroxypropyl methyl cellulose, hydroxyethyl cellulose, carboxymethyl cellulose, methyl cellulose or the like. When the composition contains components selected from powder defoamers, powder shrinkage reducers and powder thickeners, the content thereof is preferably 1 mass% or more and more preferably 5 mass% or more, and preferably 40 mass% or less and more preferably 20 mass% or less relative to copolymer 1 in terms of active components content. The powder dispersant composition for hydraulic compositions produced by the present invention may be composed of copolymer 1 and components selected from powder defoamers, powder shrinkage reducers and powder thickeners.

In the present invention, the dispersant composition may be formulated with the above optional components by powderizing the mixture for drying formulated therewith or adding them to the powder of copolymer 1.

The powder dispersant composition for hydraulic compositions produced by the present invention is a powder. As used herein, the powder means any of solid particles including those in the form of particles, flakes, pellets, granules or the like. The shape of the powder may either be uniform or non-uniform.

The powder dispersant composition for hydraulic compositions produced by the present invention has an average particle size of preferably 1 µm or more, more preferably 10 µm or more and further preferably 20 µm or more, and preferably 90 µm or less, more preferably 80 µm or less and further preferably 70 µm or less.

The powder dispersant composition for hydraulic compositions produced by the present invention may have a median diameter (D50) of 1 µm or more, further 25 µm or more and further 50 µm or more, and 90 µm or less, further 80 µm or less and further 70 µm or less.

Further, the powder dispersant composition for hydraulic compositions produced by the present invention may have a proportion of particles with a particle size of 1 µm or more and 250 µm or less of 90 mass% or more and further 95 mass% or more, and 100 mass% or less.

Further, the powder dispersant composition for hydraulic compositions produced by the present invention may have a median diameter (D50) of 1 µm or more, further 25 µm or more and further 50 µm or more, and 90 µm or less, further 80 µm or less and further 70 µm or less, and a proportion of particles with a particle size of 1 µm or more and 250 µm or less of 90 mass% or more and further 95 mass% or more, and 100 mass% or less.

According to the present invention, provided is a powder dispersant composition for hydraulic compositions produced by the method of the present invention, wherein the powder dispersant composition for hydraulic compositions has a median diameter (D50) of 1 µm or more and 90 µm or less, and a proportion of particles with a particle size of 1 µm or more and 250 µm or less of 90 mass% or more and 100 mass% or less. The matters described in the production method of the present invention are appropriately applicable to the powder dispersant composition for hydraulic compositions of the present invention. The same applies to preferred ranges for the median diameter and the proportion of particles with a particle size of 1 µm or more and 250 µm or less.

According to the present invention, provided is a powdered hydraulic composition formulated with a hydraulic powder and the powder dispersant composition for hydraulic compositions of the present invention. The matters described in the production method and the powder dispersant composition for hydraulic compositions of the present invention are appropriately applicable to the powdered hydraulic composition of the present invention.

The powdered hydraulic composition of the present invention may be the so-called premix for hydraulic compositions. The powdered hydraulic composition of the present invention is a mixture for producing hydraulic compositions such as concrete, mortar or the like, and is obtained by mixing in advance the powder dispersant composition for hydraulic compositions of the present invention with a hydraulic powder. Usually, the powdered hydraulic composition of the present invention is used by mixing with water. The powdered hydraulic composition of the present invention may be, for example, a mortar premix.

The hydraulic powder is a powder having the property of hardening through a hydration reaction, and examples thereof include cement, gypsum and the like. The hydraulic powder is preferably cement such as ordinary Portland cement, belite cement, moderate heat cement, high early strength cement, ultra high early strength cement, sulfate resistant cement or the like, and may also be blast furnace slag cement, fly ash cement, silica fume cement or the like, which are obtained by adding to the above cements powders with pozzolanic properties and/or latent hydraulic properties such as blast furnace slag, fly ash, silica fume or the like, limestone powder (calcium carbonate powder), or the like. Here, in the present invention, the amount of the hydraulic powder includes not only the amount of a powder having the property of hardening through a hydration reaction such as cement or the like, but also that of a powder selected from powders with pozzolanic properties, powders with latent hydraulic properties and limestone powder (calcium carbonate powder) if the hydraulic powder includes any. Further, if the powder having the property of hardening through a hydration reaction contains a high strength admixture agent, the amount of the high strength admixture agent is also included in the amount of the hydraulic powder. The same applies to mass percentages, mass ratios or the like pertaining to the mass of the hydraulic powder.

In the powdered hydraulic composition of the present invention, a formulation amount of the powder dispersant composition for hydraulic compositions of the present invention may be 0.01 parts by mass or more, further 0.1 parts by mass or more and further 0.2 parts by mass or more, and 5 parts by mass or less, further 3 parts by mass or less and further 1 part by mass or less relative to 100 parts by mass of the hydraulic powder.

According to the present invention, provided is a method for producing a powdered hydraulic composition including, producing a powder dispersant composition for hydraulic compositions by the production method of the present invention, and mixing the produced powder dispersant composition for hydraulic compositions with a hydraulic powder.

The matters described in the method for producing a powder dispersant composition for hydraulic compositions, the powder dispersant composition for hydraulic compositions and the powdered hydraulic composition of the present invention are appropriately applicable to the method for producing a powdered hydraulic composition of the present invention.

### Examples

### <Example 1 and comparative example 1>

### (1) Preparation of aqueous solution for dispersant

An aqueous solution containing each of the following copolymers and water was prepared. This aqueous solution had a solids concentration of the copolymer of 40 mass% and a pH (25°C) of 3. A 48% sodium hydroxide aqueous solution (manufactured by Kanto Chemical Co., Inc.) was added thereto to adjust the pH to values as shown in Table 1, thereby preparing various aqueous solutions for dispersant. The pH of the above aqueous solution and aqueous solutions for dispersant was measured by an electrode-type pH meter (manufactured by Horiba, Ltd.) at 25°C. Hereinafter, pH measurement was carried out according to the same method for the other examples and comparative examples. The types of copolymers used or the like are also listed together in Table 1.

### <Copolymer>

- Copolymer A: methacrylic acid/methoxypolyethylene glycol (25) monomethacrylate=75 moles/25 moles (the numeral shown in parentheses is n which is an average number of added moles in the formula (2), the same applies hereinafter), weight average molecular weight=50,000, pH 3 (active solids content: 40 mass%, measurement was carried out by the electrode-type pH meter at 25°C, the same applies hereinafter)
- Copolymer B: acrylic acid/methacrylic acid/methoxypolyethylene glycol (45) monomethacrylate=35 moles/35 moles/30 moles, weight average molecular weight=40,000, pH 3
- Copolymer C: acrylic acid/polyethylene glycol (55) methallyl ether=80 moles/20 moles, weight average molecular weight=35,000, pH 3
- Copolymer D: methacrylic acid/methoxypolyethylene glycol (120) monomethacrylate=90 moles/10 moles, weight average molecular weight=39,000, pH 3

### <Example 1 and comparative example 1>

### (1) Production of powder dispersant composition for hydraulic compositions by spray drying method

Some aqueous solutions for dispersant prepared as described above were spray-dried by actual powderization equipment to evaluate the ease of drying. The powderization equipment used was provided with a disk atomizer, an air blower and a dryer, and the dryer inlet and outlet temperatures were 150°C and 80°C, respectively, the ambient temperature was 20°C and the number of revolutions of the disk atomizer was 18,000 rpm. Each obtained product was thereafter put through a 1-mm mesh sieve for removing coarse particles and foreign substances, and those passing therethrough were used for testing as a powder dispersant composition for hydraulic compositions.

### (2) Production of powder dispersant composition for hydraulic compositions by drum drying method

Some aqueous solutions for dispersant prepared as described above were formed into sheets by actual drum drying equipment. The powderization equipment used was provided with a drying drum and a scraper, and the drying drum area was 6.2 m², the number of revolutions of the drying drum was 3.1 rpm, the drying drum temperature was 130°C and the ambient temperature was 30°C. Subsequently, each obtained sheet was cooled by actual drum cooling equipment and ground by a feather mill. The cooling equipment was installed near the powderization equipment such that sample sheets peeled off by the scraper from the above drum drying equipment were continuously conveyed to the cooling equipment. The cooling equipment used was provided with a cooling drum, and the cooling drum area was 5.8 m², the number of revolutions of the cooling drum was 1.5 rpm, the cooling drum temperature was 22°C and the ambient temperature was 30°C. The dried product after grinding was put through a 700-µm mesh sieve to remove coarse particles or foreign substances, and thereafter used for testing as a powder dispersant composition for hydraulic compositions.

### (3) Production of powder dispersant composition for hydraulic compositions by disk drying method

Some aqueous solution for dispersant prepared as described above was formed into a sheet by pilot disk drying equipment. The powderization equipment used was provided with a drying disk and a scraper, and the drying disk area was 0.4 m², the number of revolutions of the drying drum was 1.5 rpm, the drying drum temperature was 140°C and the ambient temperature was 30°C. Subsequently, the obtained dried product was cooled by actual cooling equipment and ground by a feather mill. The cooling/grinding equipment used had the function of sending cold air at 10°C, and the dried product was ground while cooled until the surface temperature thereof reached about 20°C. The dried product after grinding was put through a 700-µm mesh sieve to remove coarse particles or foreign substances, and thereafter used for testing as a powder dispersant composition for hydraulic compositions.

Note that, in all of the methods, a difference in sieve meshes did not affect the final particle size. For each powder dispersant composition for hydraulic compositions, particle size distribution measurement was carried out by the method mentioned earlier, and the median diameter (D50; µm) and the proportion of particles with a particle size of 1 µm or more and 250 µm or less (mass%) were measured and calculated. The results are shown in Table 1.

### (4) Calculation of yield of powder dispersant composition for hydraulic compositions

The yield of each powder dispersant composition for hydraulic compositions obtained by the above operation (1), (2) or (3) was calculated on the basis of the following calculation formula. The results are shown as "yield" in Table 1.
Yield of powder dispersant composition for hydraulic compositions (%)=[X×100]/[Y×Z]
X: mass of powder dispersant composition for hydraulic compositions (g)
Y: mass of aqueous solution for dispersant used for production (g)
Z: solids content of aqueous solution for dispersant used for production (mass%)

The solids content of the aqueous solution for dispersant was calculated by the following formula on the basis of a change in mass when 2 g of the aqueous solution for dispersant sampled in an aluminum cup was dried and solidified at 105°C for 2 hours.

Solids content of aqueous solution for dispersant (%)=[mass of aqueous solution for dispersant after drying and solidification (g)×100]/mass of aqueous solution for dispersant before drying and solidification (g)

**[Table 1]**

| | | Aqueous solution for dispersant | | | Drying method | Powder dispersant composition for hydraulic compositions | | |
|---|---|---|---|---|---|---|---|---|
| | | Copolymer | | pH | | Yield (%) | Median diameter (D50; µm) | Proportion of particles with particle size of 1 µm or more and 250 µm or less (mass%) |
| | | Type | n in formula (2) | | | | | |
| Comparative example | 1-1 | Copolymer A | 25 | 3 | Drum drying method | 0^{∗} | - | - |
| | 1-2 | | | 10 | Drum drying method | 0^{∗} | - | - |
| Example | 1-1 | | | 13 | Drum drying method | 97.1 | 98.5 | 88.0 |
| | 1-2 | | | 11 | Spray drying method | 97.9 | 71.5 | 94.9 |
| | 1-3 | | | 13 | Spray drying method | 99.2 | 60.9 | 98.2 |
| Comparative example | 1-3 | Copolymer B | 45 | 3 | Drum drying method | 0^{∗} | - | - |
| | 1-4 | | | 8 | Drum drying method | 0^{∗} | - | - |
| Example | 1-4 | | | 10 | Drum drying method | 95.5 | 120.1 | 87.4 |
| | 1-5 | | | 9 | Spray drying method | 98.8 | 60.1 | 97.1 |
| | 1-6 | | | 11 | Spray drying method | 99.2 | 45.5 | 99.0 |
| Comparative example | 1-5 | Copolymer C | 55 | 5 | Drum drying method | 0^{∗} | - | - |
| Example | 1-7 | | | 10 | Spray drying method | 96.8 | 78.3 | 96.9 |
| Comparative example | 1-6 | Copolymer D | 120 | 3 | Drum drying method | 0^{∗} | - | - |
| Example | 1-8 | | | 7 | Drum drying method | 96.2 | 135.1 | 93.3 |
| Comparative example | 1-7 | | | 6 | Spray drying method | 64.8 | 65.2 | 87.6 |
| Example | 1-9 | | | 8 | Spray drying method | 98.8 | 60.9 | 97.4 |
| | 1-10 | | | 11 | Spray drying method | 99.4 | 54.7 | 96.1 |
| | 1-11 | | | 13 | Spray drying method | 99.1 | 49.2 | 98.0 |
| | 1-12 | | | 8 | Disk drying method | 97.1 | 141.1 | 76.6 |

| | | | | | | | | |
|---|---|---|---|---|---|---|---|---|
| ^{∗} Composition is in gel form or rubber form, and powdered dried product cannot be obtained. | | | | | | | | |

As shown in Table 1, the powder dispersant compositions for hydraulic compositions of examples 1-1 to 1-12 exhibited superior yields as compared with those of comparative examples 1-1 to 1-7. This is considered to be because pH enhancement improved the ease of drying of the aqueous solutions for dispersant and effectively promoted the drying processes, thereby improving the efficiency of spray drying or grinding.

Considering that the drum drying method has the same drying performance as the spray drying method for materials with the same moisture content, and that the ancillary cooling equipment is also used in the drum drying method, materials which cannot be powderized by the drum drying method naturally cannot be powderized by the spray drying method.

## Claims

1. A method for producing a powder dispersant composition for hydraulic compositions comprising, drying a mixture containing a copolymer having a constituent unit (1) represented by the following formula (1) and a constituent unit (2) represented by the following formula (2) and water to produce a powder containing the copolymer, wherein:
when the copolymer is a copolymer whose n in the constituent unit (2) is less than 40, the mixture is dried by a thin film drying method or a spray drying method with a pH of 11 or more and 14 or less;
when the copolymer is a copolymer whose n in the constituent unit (2) is 40 or more and less than 80, the mixture is dried by a thin film drying method or a spray drying method with a pH of 9 or more and 14 or less; and
when the copolymer is a copolymer whose n in the constituent unit (2) is 80 or more, the mixture is dried by a thin film drying method or a spray drying method with a pH of 7 or more and 14 or less, 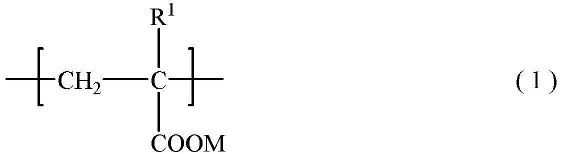 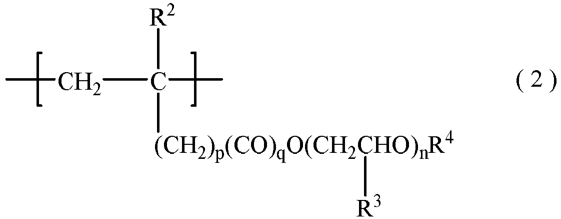
wherein R¹ and R³ are the same or different and individually represent a hydrogen atom or a methyl group; R² and R⁴ are the same or different and individually represent a hydrogen atom or an alkyl group with 1 or more and 3 or less carbons; M represents a hydrogen atom, an alkali metal, an alkaline-earth metal, ammonium or an organic ammonium; p represents a number of 0 or more and 2 or less; q represents a number of 0 or 1; and n represents an average number of added moles and a number of 5 or more and 150 or less.

2. A method for producing a powder dispersant composition for hydraulic compositions comprising, drying a mixture containing a copolymer having a constituent unit (1) represented by the following formula (1) and a constituent unit (2) represented by the following formula (2) and water to produce a powder containing the copolymer, wherein:
when the copolymer is a copolymer whose n in the constituent unit (2) is less than 40, the mixture is dried with a pH of 11 or more and 14 or less;
when the copolymer is a copolymer whose n in the constituent unit (2) is 40 or more and less than 80, the mixture is dried with a pH of 9 or more and 14 or less;
when the copolymer is a copolymer whose n in the constituent unit (2) is 80 or more and less than 100, the mixture is dried with a pH of 8 or more and 14 or less; and
when the copolymer is a copolymer whose n in the constituent unit (2) is 100 or more, the mixture is dried with a pH of 7 or more and 14 or less, 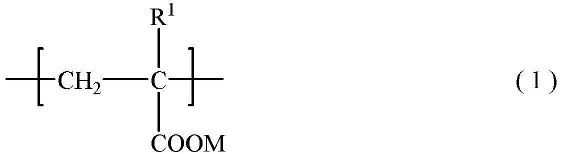 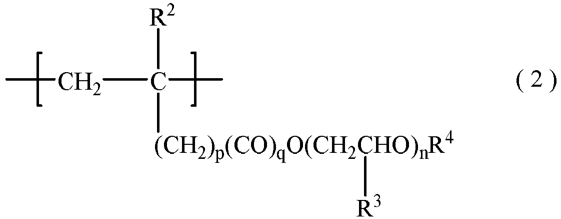
wherein R¹ and R³ are the same or different and individually represent a hydrogen atom or a methyl group; R² and R⁴ are the same or different and individually represent a hydrogen atom or an alkyl group with 1 or more and 3 or less carbons; M represents a hydrogen atom, an alkali metal, an alkaline-earth metal, ammonium or an organic ammonium; p represents a number of 0 or more and 2 or less; q represents a number of 0 or 1; and n represents an average number of added moles and a number of 5 or more and 150 or less.

3. The method for producing a powder dispersant composition for hydraulic compositions according to claim 2, wherein the mixture is dried by heat drying.

4. The method for producing a powder dispersant composition for hydraulic compositions according to claim 2 or 3, wherein the mixture is dried by a thin film drying method or a spray drying method.

5. The method for producing a powder dispersant composition for hydraulic compositions according to any one of claims 2 to 4, wherein
when the copolymer is a copolymer whose n in the constituent unit (2) is 80 or more and less than 100, the mixture is dried with a pH of more than 9 and 14 or less.

6. The method for producing a powder dispersant composition for hydraulic compositions according to any one of claims 1 to 5, wherein a proportion of the total of the constituent unit (1) and the constituent unit (2) in all constituent units of the copolymer is 80 mol% or more.

7. The method for producing a powder dispersant composition for hydraulic compositions according to any one of claims 1 to 6, wherein a molar ratio of the constituent unit (1) and the constituent unit (2) in the copolymer, constituent unit (1)/constituent unit (2), is 1 or more and 10 or less.

8. The method for producing a powder dispersant composition for hydraulic compositions according to any one of claims 1 to 7, wherein a pH of the mixture of the copolymer is adjusted with a hydroxide of an alkali metal or an alkaline-earth metal.

9. The method for producing a powder dispersant composition for hydraulic compositions according to any one of claims 1 to 8, wherein the copolymer has a weight average molecular weight of 20,000 or more and 70,000 or less.

10. The method for producing a powder dispersant composition for hydraulic compositions according to any one of claims 1 to 9, wherein q in the formula (2) is 1.

11. The method for producing a powder dispersant composition for hydraulic compositions according to any one of claims 1 to 10, wherein a powder dispersant composition for hydraulic compositions having a median diameter (D50) of 1 µm or more and 90 µm or less and a proportion of particles with a particle size of 1 µm or more and 250 µm or less of 90 mass% or more and 100 mass% or less is produced.

12. A powder dispersant composition for hydraulic compositions produced by the method according to any one of claims 1 to 11, wherein the powder dispersant composition for hydraulic compositions has a median diameter (D50) of 1 µm or more and 90 µm or less and a proportion of particles with a particle size of 1 µm or more and 250 µm or less of 90 mass% or more and 100 mass% or less.

13. A powdered hydraulic composition formulated with a hydraulic powder and the powder dispersant composition for hydraulic compositions according to claim 12.
